(19) Europäisches Patentamt
European Patent Office
Office européen des brevets

(11) **EP 1 349 112 B1**

(12) **EUROPÄISCHE PATENTSCHRIFT**

(45) Veröffentlichungstag und Bekanntmachung des Hinweises auf die Patenterteilung:
**15.10.2008 Patentblatt 2008/42**

(51) Int Cl.:
*G06T 1/00* *(2006.01)*     *G01N 3/06* *(2006.01)*
*G01B 11/30* *(2006.01)*    *G06T 7/00* *(2006.01)*

(21) Anmeldenummer: **03005991.9**

(22) Anmeldetag: **18.03.2003**

(54) **Objektivierung von (Oberflächen-)Prüfverfahren durch Bildverarbeitung**

Methods for testing surfaces using image processing

Méthodes de test de surfaces utilisant des traitements d'image

(84) Benannte Vertragsstaaten:
**AT BE BG CH CY CZ DE DK EE ES FI FR GB GR HU IE IT LI LU MC NL PT RO SE SI SK TR**

(30) Priorität: **28.03.2002 DE 10213910**

(43) Veröffentlichungstag der Anmeldung:
**01.10.2003 Patentblatt 2003/40**

(73) Patentinhaber: **Wieland-Werke AG**
**89070 Ulm (DE)**

(72) Erfinder:
• **Theobald, Stefan, Dr.**
**89250 Senden (DE)**
• **Heinrich, Manfred**
**89287 Bellenberg (DE)**
• **Ritter, Petra**
**89269 Vöhringen (DE)**

(56) Entgegenhaltungen:
| EP-A- 0 893 669 | DE-A- 4 127 116 |
| DE-A- 19 614 896 | US-A- 5 311 286 |
| US-A- 5 379 107 | US-A- 5 500 535 |

**Beschreibung**

Die Erfindung betrifft ein Verfahren zur objektiven Beurteilung von Biegekanten von Metallbändern.

Bei der Untersuchung der Oberfläche von Metallbändern, insbesondere aus Cu oder Cu-Legierungen, tritt öfter der Fall auf, dass zwar Richtlinien für die Herstellung der zu untersuchenden Proben vorliegen, das Ergebnis der Prüfung jedoch durch subjektiven Vergleich des Beobachteten mit einer vorgegebenen Richtreihe ermittelt wird, so dass das Ergebnis der Prüfung u. a. von dem Geschick und der Erfahrung des Prüfers abhängt.

Dies ist z. B. bei der Beurteilung der Biegekante von Metallbändern gegeben.

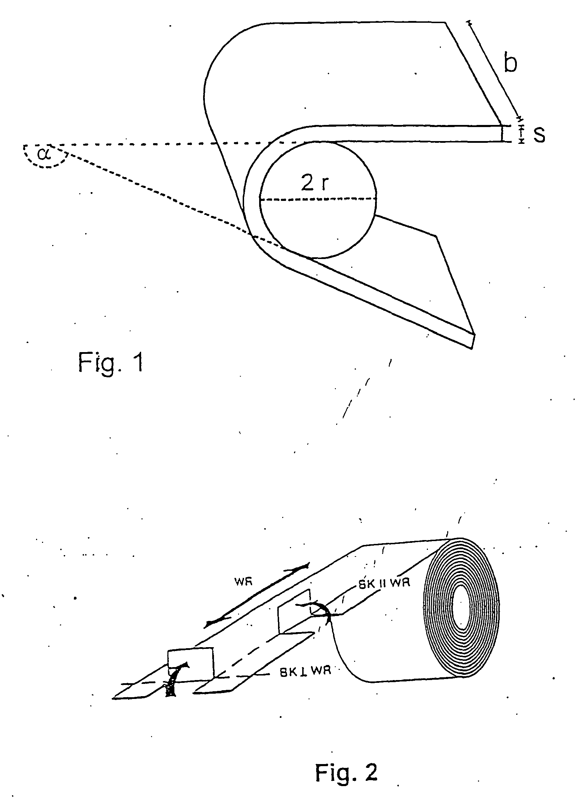

Proben für den Biegeversuch werden entsprechend EN 7438:2000 unter Verwendung entsprechender Biegestempel und Matrizen hergestellt. Die Biegeproben sind charakterisiert durch Dicke $s$, Breite $b$, Biegeradius $r$, Biegewinkel und Biegerichtung relativ zur Walzrichtung (siehe Figuren 1 und 2). Üblicherweise werden Proben mit 90° oder 180° Biegewinkel verwendet. Die Probenbreiten variieren zwischen 0,25 mm und 20 mm, die Dicke erstreckt sich von 0,10 mm bis 2 mm, die Biegeradien nehmen Werte zwischen 0 mm und 10 mm an.

* vergleiche Wieland-Handbuch "Kupferwerkstoffe" (6. Auflage 1999, S. 233-235), dort: WR=Walzrichtung, BK=Biegekante

Die ASTM Designation B 820 - 98 gibt Richtlinien zur Durchführung der Prüfung an. Die Biegeproben werden derzeit unter dem Stereomikroskop (Vergrößerung üblicherweise 10-fach) begutachtet. Eine Einteilung in sechs Klassen findet statt:

| Klasse | Beurteilungstext |
|--------|------------------|
| 1 | glatt, keine Risse |
| 2 | leicht rauh, leichte Orangenhaut, keine Risse |
| 3 | Orangenhaut bis starke Orangenhaut, keine Risse |
| 4 | am Beginn des Reißens, Anrisse |
| 5 | Risse bis starke Risse |
| 6 | Probe gebrochen |

Als Fehlerkriterium zählt das Auftreten von Anrissen in der Biegekante.

Die Ergebnisse werden dokumentiert, indem der kleinstmögliche Biegeradius, bei dem gerade noch kein Riss auftritt, zusammen mit Biegewinkel und Biegerichtung angegeben wird. Da dieses Verfahren nicht quantitativ ist, kann die Genauigkeit dieses Testverfahrens hinsichtlich der Biegbarkeit des untersuchten Materials nicht angegeben werden. Das Ergebnis des Verfahrens hängt außerdem vom Prüfer ab.

Aus der Druckschrift EP 0 893 669 A1 ist ein Verfahren und eine Vorrichtung zum Messen der Verformung einer mechanischen Testprobe bekannt. Die Vorrichtung besteht aus einem Michelson-Interferometer und einer Biegeeinrichtung, mit der eine Testprobe mittels eines Stempels kalottenartig verformt und mit dem Interferometer vermessen werden kann. Hierzu wird mit einer ebenen Probe die Messvorrichtung zunächst kalibriert und anschließend die Probe in kontrollierter Weise einem mechanischen Druck ausgesetzt und verformt, das Interferenzbild erfasst und verarbeitet, um Informationen bezüglich der Defekte (Risse) und Ungleichmäßigkeiten der Probenoberfläche zu erhalten.

Ebenso sind aus der Druckschrift US 5,311,286 ein Verfahren und eine Vorrichtung zur Messung der Oberflächenrauheit bekannt. Das interferometrische Messverfahren bedient sich dabei der Auswertung von Moire-Mustern an flachen Stahl Substraten.

Ausgehend von diesem speziellen Fall liegt der Erfindung daher die Aufgabe zugrunde, ein vom durchführenden Prüfer unabhängiges, quantitatives Verfahren zur Beurteilung der Probenoberfläche anzugeben, das zudem noch weitgehend automatisch arbeitet und die Ergebnisse protokolliert und dokumentiert.

Die Aufgabe wird erfindungsgemäß gelöst durch ein Verfahren zur objektiven Beurteilung von Biegekanten gemäß Anspruch 1. Die weiteren rückbezogenen Ansprüche betreffen vorteilhafte Aus- und Weiterbildungen der Erfindung.

Anwendung findet ein Verfahren zur Bildverarbeitung (mittels optischer Bilderfassungseinheit, digitaler Auswerteeinheit und Software-Algorithmen), bei dem für jeden Bildpunkt $(x,y)$ des Messfeldes einer untersuchten Probenoberfläche eine Information $z(x,y)$ ermittelt wird und daraus Ergebnisgrößen errechnet werden, auf die Korrelation dieser Ergebnisgrößen mit einer vorgegebenen Skala bisher durch subjektive Einschätzung ermittelter Qualitätskennzahlen einer betreffenden Eigenschaft der untersuchten Probe, zum Zweck der anschließenden Ausgabe eines objektiven Untersuchungsergebnisses.

Die optische Bildverarbeitung bedient sich dem Verfahren der Streifenprojektion, das die dreidimensionale Oberflächentopographie ermittelt und auf die objektive Beurteilung der Biegekante von Metallbändern angewandt.

Bei dem genannten Verfahren werden mehrere bekannte Grauwertmuster (Streifen) auf eine unbekannte Oberflächentopographie abgebildet und mit einer Kamera aufgenommen. Aus den Aufnahmen der Streifenbilder errechnet das Gerät mit bekannten Algorithmen zu jedem Bildpunkt (x, y) die Höheninformation h(x, y). Daraus lassen sich - analog zum Tastschnittverfahren - optisch ermittelte Rauheitswerte errechnen. Dieses Verfahren als solches ist zwar bekannt (vergleiche beispielsweise DE-OS 4.217.768), eine Übertragung auf die Beurteilung der Biegekante wurde bisher allerdings nicht vorgenommen.

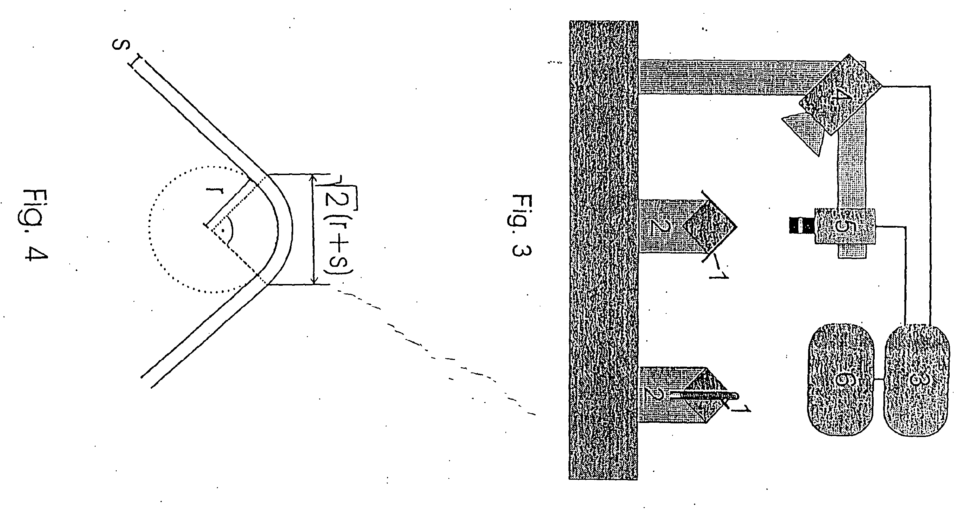

Die Erläuterung der Erfindung erfolgt anhand der Figuren 3 bis 5 für die Biegekanteprüfung.

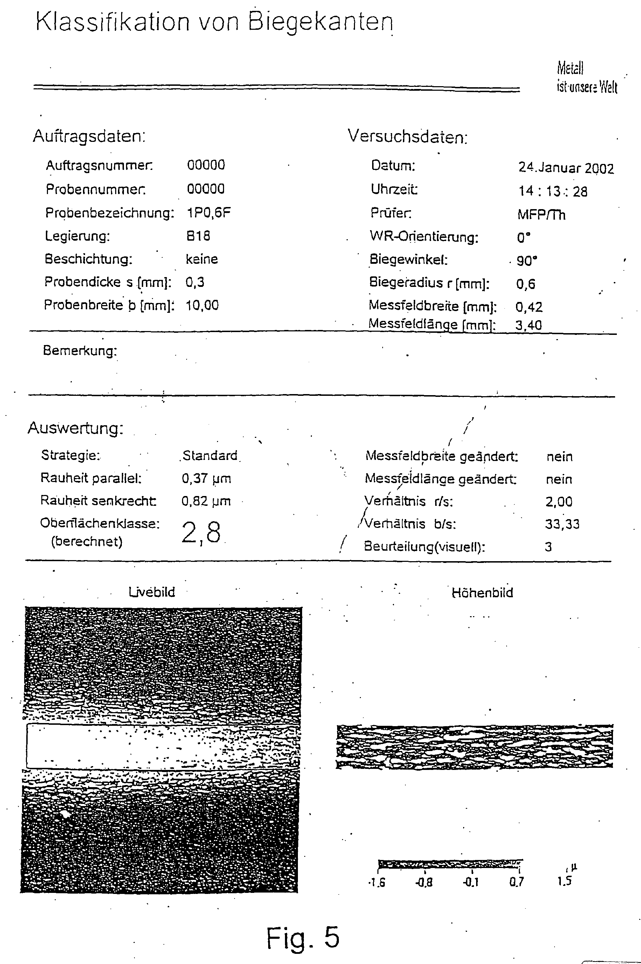

Der <u>Messaufbau für die Biegekantenprüfung</u> ist in Figur 3 schematisch dargestellt. Die Probe 1 wird auf einer entsprechenden Halterung 2 fixiert (90°-Biegeprobe auf Raute, 180°-Biegeprobe, offene Schenkel auf Schneide, 180°-Biegeprobe, geschlossene Schenkel geklemmt). Die Probenoberfläche wird als Kamerabild auf dem Monitor im Steuer- und Auswerterechner 3 dargestellt. Der Bediener führt eine Schärfeneinstellung durch Veränderung des Abstandes zwischen Probe 1 und Projektor- 4 / Kameraeinheit 5 durch. Die Messfeldlänge entspricht standardmäßig der Breite des maximal abbildbaren Messfeldes (bei diesem 3,40 mm), kann aber beliebig kleiner eingestellt werden. Die Messfeldbreite errechnet sich aus Biegeradius r und Probendicke s (Figur 4) und wird auf $\sqrt{2}/3 \cdot (r+s)$ voreingestellt und kann bis zur maximal abbildbaren Messfeldbreite von 2,5 mm vergrößert werden. Die laterale Auflösung beträgt 4,4$\mu$m je Bildpunkt. Mit einem Projektor 4 wird eine Sequenz von Streifenmustern auf die Biegeprobe 1 projiziert und mit einer Kamera 5 aufgenommen. Projektor 4 und Kamera 5 werden über entsprechende Interface-Karten vom Rechner 3 gesteuert. Die Bedienung geschieht ebenfalls über die grafische Bedienoberfläche des Rechners 3. Die Messung läuft vollständig automatisch ab. Die bei der Biegung entstandene, sattelförmige Probenform wird durch eine Polynomfläche mathematisch beschrieben. Die Polynomfläche wird dann von den Messdaten abgezogen (rechnerische Einebnung der Biegekante). Abweichungen der gemessenen Daten zu dieser Fläche sind dann Rauheiten, Anrissen oder Rissen zuzuschreiben. Aus den Daten werden mittlere Rauheitswerte parallel $R_x$ und senkrecht Ry zur Biegekante, Flächenrauheit und maximale Rautiefe $R_{max}$ ermittelt. Aus den Größen wird eine Ergebnisgröße errechnet (hier: Ergebnisgröße = 0,5 *($R_x$+$R_y$)). Durch einen eindeutigen, funktionellen Zusammenhang wird aus der Ergebnisgröße die Oberflächenklasse berechnet. Die Prüfparameter und Prüfergebnisse werden auf dem Bildschirm des Steuerrechners 3 dargestellt und in geeigneter Form (beispielsweise Figur 5) protokolliert. Die Daten werden automatisch in Ergebnisdateien 6 abgespeichert.

### Patentansprüche

1. Verfahren zur objektiven Beurteilung von Biegekanten von Metallbändern, insbesondere aus Cu oder Cu-Legierungen, bei dem die dreidimensionale Topographie der Biegekante mittels Streifenprojektionsverfahren vermessen und dabei für jeden Bildpunkt (x, y) des Messfeldes eine Höheninformation h(x, y) ermittelt wird und als Ergebnisgrößen aus der Höheninformation mittlere Rauheitswerte errechnet werden, wobei zur Berechnung der einzelnen Rauheitswerte von den Höheninformationen h(x, y) die mathematisch beschriebene Probenform subtrahiert wird und mit diesen Ergebnisgrößen eine Klassifizierung der Biegekante durchgeführt wird.

2. Verfahren nach Anspruch 1, **dadurch gekennzeichnet, dass** die Voreinstellung der Messfeldgröße nach der durch den Biegeradius r und Probendicke s vorgegebenen Probengeometrie erfolgt.

3. Verfahren nach Anspruch 1 oder 2, **dadurch gekennzeichnet, dass** sich die mittleren Rauheitswerte aus Rauheitswerten längs und Rauheitswerten quer zur Biegekante zusammensetzen.

### Claims

1. Method for objectively assessing edge bends of metal strips, in particular composed of copper or copper alloys, wherein the three-dimensional topography of the edge bend is measured by means of strip projection methods and a height information value h(x, y) is established for each pixel (x, y) of the measurement field and mean rough values are calculated as result variables from the height information value, with the mathematically described reference shape being subtracted from the height information values h(x, y) in order to calculate the individual rough values and a classification of the edge bend being carried out with those result variables.

2. Method according to claim 1, **characterised in that** the presetting of the measurement field variable is carried out in accordance with the reference geometry which is established by the bending radius r and reference thickness S.

3. Method according to claim 1 or 2, **characterised in that** the mean rough values are composed of rough values longitudinally and rough values transversely relative to the edge bend.

**Revendications**

1. Procédé pour examiner et évaluer objectivement des arêtes de pliage de bandes de métal, notamment en Cu ou en alliages de Cu, selon lequel on procède à la mesure de la topographie tridimensionnelle de l'arête de pliage au moyen d'un procédé de projection de franges, en déterminant à cette occasion pour chaque point image (x, y) du champ de mesure une information de hauteur h(x, y), et on calcule en tant que grandeurs de résultat, à partir de l'information de hauteur, des valeurs moyennes de rugosité, le calcul des valeurs de rugosité individuelles se faisant par soustraction de la forme d'échantillon décrite mathématiquement des informations de hauteur h(x, y), et l'on effectue une classification de l'arête de pliage à l'aide de ces grandeurs de résultat.

2. Procédé selon la revendication 1, **caractérisé en ce que** le préréglage de la grandeur du champ de mesure est effectué en fonction de la géométrie de l'échantillon prescrite par le rayon de courbure r et l'épaisseur s de l'échantillon.

3. Procédé selon la revendication 1 ou 2, **caractérisé en ce que** les valeurs moyennes de rugosité se composent de valeurs de rugosité le long et de valeurs de rugosité transversalement à l'arête de pliage.

Fig. 1

Fig. 2

Fig. 3

$$\sqrt{2}\,(r+s)$$

Fig. 4

# Klassifikation von Biegekanten

Metall
ist unsere Welt

**Auftragsdaten:**

| | |
|---|---|
| Auftragsnummer: | 00000 |
| Probennummer: | 00000 |
| Probenbezeichnung: | 1P0,6F |
| Legierung: | B18 |
| Beschichtung: | keine |
| Probendicke s [mm]: | 0,3 |
| Probenbreite b [mm]: | 10,00 |

**Versuchsdaten:**

| | |
|---|---|
| Datum: | 24.Januar 2002 |
| Uhrzeit: | 14 : 13 : 28 |
| Prüfer: | MFP/Th |
| WR-Orientierung: | 0° |
| Biegewinkel: | 90° |
| Biegeradius r [mm]: | 0,6 |
| Messfeldbreite [mm]: | 0,42 |
| Messfeldlänge [mm]: | 3,40 |

Bemerkung:

**Auswertung:**

| | |
|---|---|
| Strategie: | Standard |
| Rauheit parallel: | 0,37 µm |
| Rauheit senkrecht: | 0,82 µm |
| Oberflächenklasse: (berechnet) | 2,8 |

| | |
|---|---|
| Messfeldbreite geändert: | nein |
| Messfeldlänge geändert: | nein |
| Verhältnis r/s: | 2,00 |
| Verhältnis b/s: | 33,33 |
| Beurteilung(visuell): | 3 |

Livebild

Höhenbild

-1.6    -0.8    -0.1    0.7    1.5    µ

## Fig. 5

Klasse 4

Klasse 8

Klasse 3

Klasse 7

Klasse 2

Klasse 1 bis 4 positiv - akzeptabel

Klasse 6

Klasse 5 bis 8 negativ - nicht akzeptabel

Klasse 1

Klasse 5

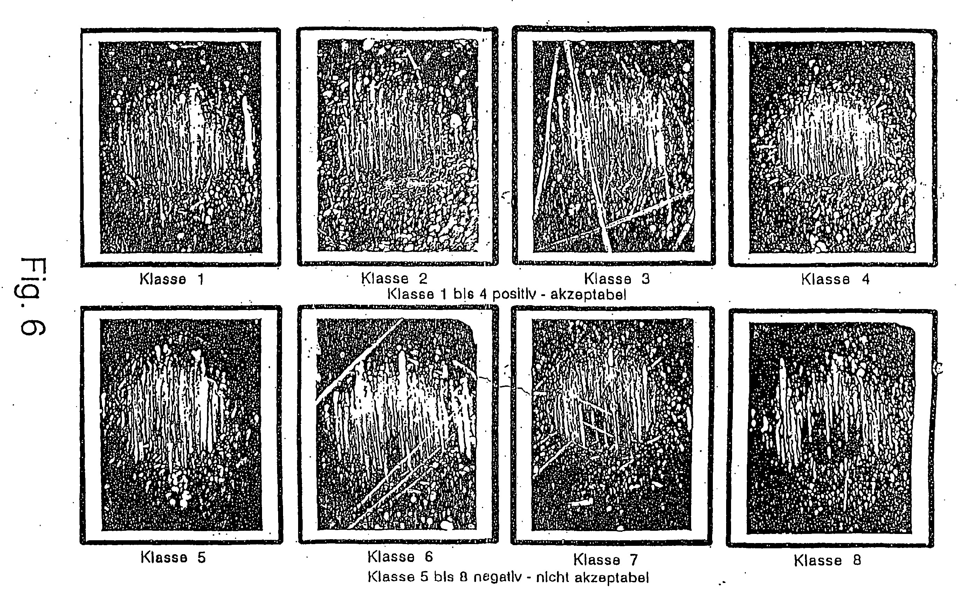

Fig. 6

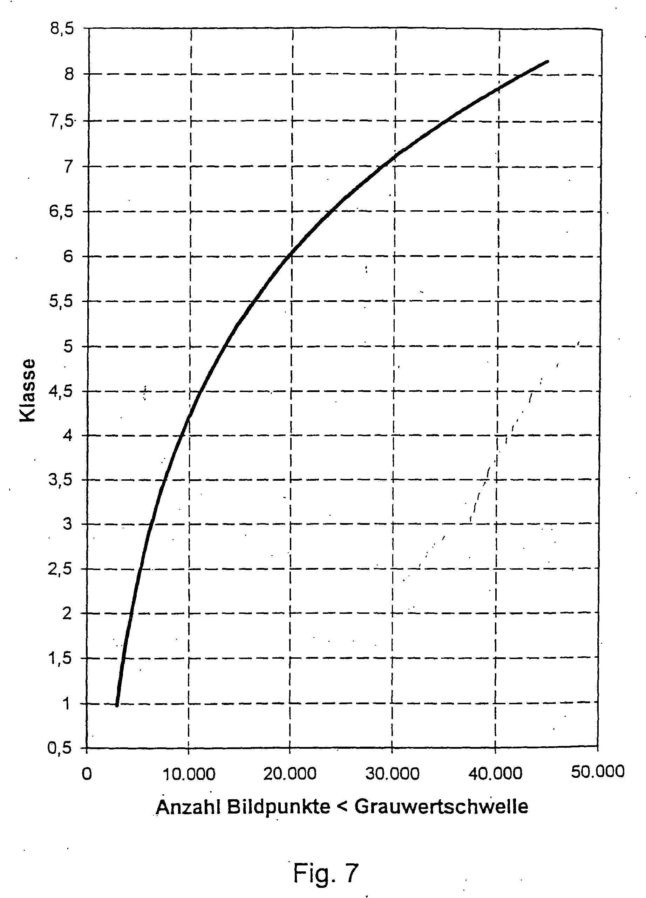

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0893669 A1
- US 5311286 A
- DE 4217768 A

### In der Beschreibung aufgeführte Nicht-Patentliteratur

- *Kupferwerkstoffe,* 1999, 233-235